# EUROPÄISCHE PATENTSCHRIFT

(11) **EP 1 566 674 B1**
(45) Veröffentlichungstag und Bekanntmachung des Hinweises auf die Patenterteilung: **06.05.2009**
(21) Anmeldenummer: 04003701.2
(22) Anmeldetag: 19.02.2004
(51) Int. Cl.: G02B 6/38

(54) **Steckergehäuse eines optischen Steckverbinders für die industrielle Umgebung**
Plug housing of an optical plug connector for industrial environment
Boîtier de connecteur optique mâle pour environnement industriel

(43) Veröffentlichungstag der Anmeldung: 24.08.2005
(73) Patentinhaber: Reichle & De-Massari AG, 8622 Wetzikon (CH)
(72) Erfinder: Mühlegg, Marion, 8635 Dürnten (CH)
(74) Vertreter: Alder, Hans Rudi

(56) Entgegenhaltungen:
- EP-A- 0 581 527
- EP-A- 1 020 743
- EP-A1- 1 333 537
- DE-T2- 60 300 484
- US-A- 5 971 626
- US-B1- 6 318 904
- US-B1- 6 612 750
- VERNON C: "RJ-45 STYLE DUPLEX FIBER OPTIC CONNECTOR WITH 2.5-MM FERRULES" OPTICAL ENGINEERING, SOC. OF PHOTO-OPTICAL INSTRUMENTATION ENGINEERS. BELLINGHAM, US, Bd. 37, Nr. 12, 1. Dezember 1998 (1998-12-01), Seiten 3124-3128, XP000790435 ISSN: 0091-3286
- 'Europäische Norm EN 50377-6-1', [Online] September 2002, Gefunden im Internet: <URL:http://www.cenelec.org/Cenelec/Homepag e.htm>

## Beschreibung

Die vorliegende Erfindung betrifft ein Steckergehäuse für einen optischen SC-RJ Stecker, für die Aufnahme mindestens eines Ferrulengehäuses, gemäss Oberbegriff des Anspruchs 1.

Steckergehäuse zum Einstecken in eine korrespondierende Steckerbuchse dienen ganz allgemein der Halterung und gezielten Führung von elektrischen oder optischen Kabeln, insbesondere um eine elektrische oder optische Verbindung von Kabelenden in einfacher Weise bewerkstelligen zu können. Derartige Verbindungen für die moderne Daten- und Kommunikationsübertragung werden im Aussenbereich ebenso verwendet, wie im Wohnbereich, Büro- oder Geschäftsbereich und in der Industrie. So haben sich zum Beispiel sogenannte RJ45-Stecker für die elektrische Signalübertragung auf dem Markt durchgesetzt. Für die Geometrie von sogenannten SC-RJ Steckern, respektive SC-RJ Steckverbinderanordnungen (Stecker/Adapter/Stecker) für optische Kabel bestehen bereits detaillierte Normvorschriften (EN 50377-6-1).

Bei der Verwendung derartiger Steckverbinderanordnungen in industrieller Umgebung erweisen sich diese jedoch als äusserst störanfällig. Insbesondere führen die mechanischen Belastungen, d.h. starken Vibrationen, und Kontaminationen der Luft, d.h. Oeldämpfe, Staub und/oder Feuchtigkeit, zu unerwünschten Beeinträchtigungen dieser empfindlichen Kontaktstellen.

Es bestehen deshalb Normen für die Ausgestaltung von industrietaulichen RJ45-Steckern, insbesondere die Norm IEC 61076-3-106 (International Electrotechnical Commission), und wird beispielsweise in der DE-100'31'341 ein Gehäusekörper für die Aufnahme eines RJ45-Steckers beschrieben, welcher sich für die Verwendung bei Steckkontakten eignet, wie sie unter industriellen Umgebungsbedingungen erforderlich sind. Der in dieser Druckschrift offenbarte Gehäusekörper ist mit einem abnehmbaren Klappdeckel versehen und derart gestaltet, dass ein normierter RJ45-Stecker in diesen Gehäusekörper eingelegt werden kann. Dieser Gehäusekörper weist darüber hinaus ein seitlich angeordnetes Klinkenpaar auf, mit dessen Hilfe der montierte Stecker an einer Steckerbuchse gesichert werden kann. Der mehrteilige Aufbau dieses Gehäusekörpers schützt die innenliegenden, elektrischen Kontaktstellen langfristig nur ungenügend und vermag den hohen Anforderungen für faseroptische Kontakte in einer industriellen Umgebung nicht mehr zu genügen.

In der EP-A1-1 333 537 wird ein weiteres Gehäusekörpers für die Aufnahme eines RJ45-Steckers beschrieben, wobei der Gehäusekörper eine abdichtende Funktion hat.

So wird beispielsweise in der US 5,727,963 eine elektrische Steckverbindung beschrieben, welche für die Verwendung in einer industriellen Umgebung besonders ausgestaltet ist. Diese Anordnung umfasst ebenfalls einen mehrteiligen Gehäusekörper mit einem beidseitig angeordneten Klinkenpaar. Leider sind auch bei dieser Anordnung keine besonderen Massnahmen vorgesehen, um den Kontaktbereicht langfristig vor Feuchtigkeit, Staub oder anderen Kontaminationen zu schützen. Darüberhinaus werden Vibrationen ungedämpft auf die Kontaktstellen übertragen.

Es besteht heute das Bedürfnis, optische Steckverbindungen, wie sie beispielsweise in der WO 99/42877 beschrieben werden, vermehrt auch im Industriebereich verwenden zu können. Um derartige optische Steckeranordnungen im industriellen Bereich langfristig verwenden zu können, sind besondere Vorkehrungen zum Schutz der empfindlichen optischen Kabelenden erforderlich. Leider eignen sich keine der für elektrische Kabel bekannten Steckeranordnungen für die Verwendung mit optischen Kabeln. So wird beispielsweise in der US 6'648'520 eine Steckeranordnung für optische Kabel beschrieben, welche eine robuste Steckverbinderkapsel für ein Kabelendstück aufweist. Diese Steckverbinderkapsel wird mit Hilfe einer Überwurfmutter an einem am optischen Kabel befestigten Haltestück festgeklemmt. Leider löst sich eine derartige Befestigung wegen der permanenten Vibrationen im industriellen Umfeld mit der Zeit und lässt sich eine derartige Steckeranordnung nicht in einfacher Weise vor Ort konfektionieren.

Es ist deshalb Ziel der vorliegenden Erfindung, eine Steckeranordnung für einen optischen Steckverbinder zu schaffen, welche im industriellen Umfeld längerfristig verwendbar ist und sich vor Ort und in einfacher Weise zusammenbauen lässt. Vorzugsweise soll diese Steckeranordnung zerstörungsfrei demontierbar sein.

Insbesondere ist es Aufgabe der vorliegenden Erfindung ein Steckergehäuse für einen optischen Steckverbinder zu schaffen, welcher die Nachteile der bekannten Steckverbinder nicht aufweist, sowie eine Steckverbinderkapsel zu schaffen, welche für die sichere Aufnahme eines derartigen Steckergehäuses geeignet ist.

Diese Aufgabe wird erfindungsgemäss durch ein Steckergehäuse mit den Merkmalen des Anspruchs 1 gelöst, und insbesondere durch ein Steckergehäuse eines optischen Steckverbinders bekannter Art, welcher für die Aufnahme mindestens eines Ferrulengehäuses geeignet ist, wobei dieses Steckergehäuse erste Befestigungsmittel für eine langfristig sichere Befestigung mit einer Steckverbinderkapsel aufweist, um eine industrietaugliche Steckverbindung zu erzeugen.

Bevorzugte Weiterbildungen des erfindungsgemässen Steckergehäuses weisen die Merkmale der Unteransprüche auf.

So weist das erfindungsgemässe Steckergehäuse vorteilhafterweise erste Befestigungsmittel auf, welche sich für eine lösbare Befestigung mit einer Steckverbinderkapsel eignen. Diese ersten Befestigungsmittel umfassen mindestens ein Rastelement für die Bildung eines mit der Steckverbinderkapsel wirkungskomplemetär zusammenwirkenden Schnappverschlusses. Vorzugsweise umfassen die ersten Befestigungsmittel (16) mindestens ein Rastelement für die Bildung eines mit der Steckverbinderkapsel wirkungskomplementär zusammenwirkenden Dreh-Schnappverschlusses. Das Rastelement kann in einer ersten Ausführungsform eine einfache Rastnut oder in einer anderen Ausführungsform eine Rastnase aufweisen. In einer bevorzugten Weiterbildung der erfindungsgemässen ersten Befestigungsmittel weist das Rastelement eine Rastnase auf, welche quer zur Steckrichtung (R) kreissegmentförmig geformt ist, um in einer Führungsnut im Innern der Steckverbinderkapsel spielfrei geführt werden zu können.

Die gestellte Aufgabe wird weiter durch eine Steckverbinderkapsel gelöst, welche das oben beschriebene Steckergehäuse aufnehmen kann und mit diesem in geeigneter Weise zusammenwirkt. Insbesondere sind zweite Befestigungsmittel für eine lösbare Befestigung mit dem erfindungsgemässen Steckergehäuse vorgesehen, welche zweiten Befestigungsmittel wirkungskomplementär mit den ersten Befestigungsmitteln des Steckergehäuses zusammenwirken. In einer Weiterbildung dieser Steckverbinderkapsel sind dritte Befestigungsmittel vorgesehen, mit welchen die Steckverbinderkapsel an einem Anbaurahmen oder einem Gerätegehäuse lösbar befestigt werden kann. Diese dritten Befestigungsmittel können als Klinke, resp. Klinkenpaar ausgebildet sein und wirkungskomplementäre Gegenelemente am Anbaurahmen oder am Gerätegehäuse hintergreifen. Ebenso einfach lässt sich für die Ausgestaltung dieser dritten Befestigungsmittel auch eine Überwurfmutter vorsehen.

Die Vorteile der vorliegenden Erfindung sind dem Fachmann unmittelbar ersichtlich und liegen in der Schaffung einer unter industriellen Verhältnissen auch langfristig sicheren und funktionstüchtigen Steckeranordnung, in deren einfachen Handhabung und kostengünstigen Herstellung. Insbesondere lässt sich diese Steckeranordnung mit Hilfe des erfindungsgemäss ausgebildeten Steckergehäuses in einfacher Weise zusammenbauen und vorzugsweise auch zerstörungsfrei demontieren.

Im Folgenden soll die Erfindung anhand eines Ausführungsbeispiels und mit Hilfe der Figuren näher beschrieben werden. Es zeigen:
- Fig. 1: eine Explosionsdarstellung einer Steckverbindungsanordnung für optische Kabel mit einem erfindungsgemässen Steckergehäuse und einer dazu passenden Steckverbinderkapsel;
- Fig. 2a - 2c: räumliche Darstellungen zum Montageablauf des erfindungsgemässen Steckergehäuses mit der erfindungsgemässen Steckverbinderkapsel.
- Fig. 3a - 3c: detaillierte Darstellungen des erfindungsgemässen Steckergehäuses;
- Fig. 4: eine Aufsicht der erfindungsgemäss ausgerüsteten Steckeranordnung; und
- Fig. 5: eine räumliche Ansicht einer Buchse für die Aufnahme der erfindungsgemässen Steckeranordnung gemäss Fig. 4.

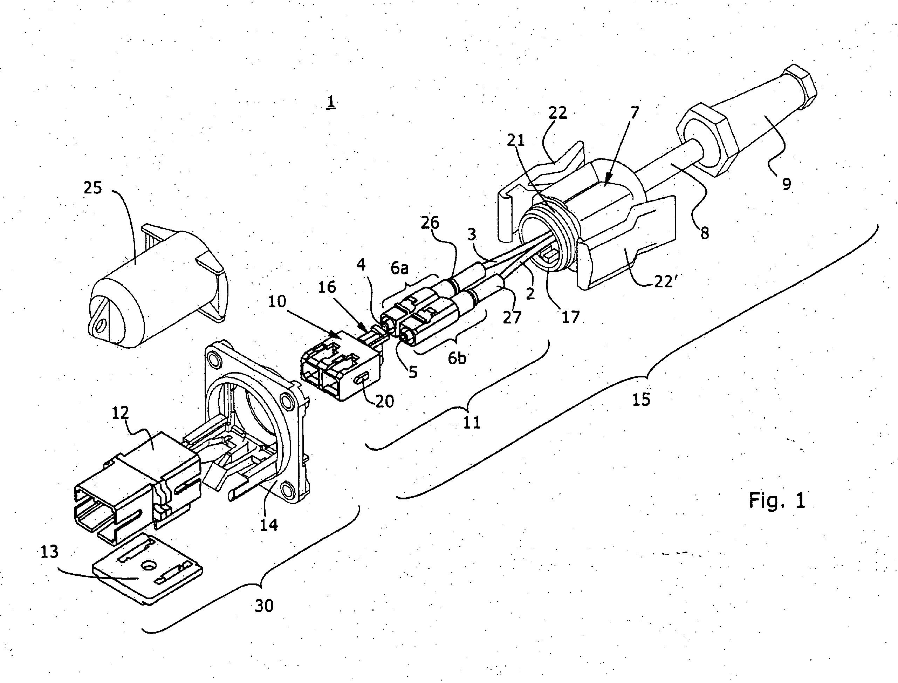

Figur 1 zeigt eine Steckverbindungsanordnung 1 für zwei optische Kabel 2, 3, auch Lichtwellenleiter genannt, deren Enden je mit einer Ferrule 4, 5 versehen sind. Diese Ferrulen 4, 5 werden in genormten Ferrulengehäusen 6a, 6b in bekannter Weise, d.h. mit Hilfe von Ferrulenhaltern 26 und Crimphülsen 27 gehalten. Die beiden optischen Kabel 2, 3 sind durch eine Steckverbinderkapsel 7 geführt und durch einen Kabelmantel 8 geschützt. Diese Steckverbindungsanordnung 1 weist zudem einen Knickschutz 9 bekannter Art auf, um die optischen Kabel 2, 3 vor einem ungewünschten Abknicken zu schützen. Darüber hinaus ist ein Steckergehäuse 10 vorgesehen, welches die Ferrulengehäuse 6a, 6b aufnimmt und so einen Steckverbinder 11, insbesondere einen SC-RJ Steckverbinder, bildet. Die derart zusammengesetzte Steckeranordnung 15 kann in einen Adapter 12 eingesteckt werden, welcher mit Hilfe einer Trägerplatte 13 an einem Anbaurahmen 14 befestigt ist. Es versteht sich, dass für derartige Steckverbindungsanordnungen auch eine Schutzkappe 25 vorgesehen wird, welche über die Steckeranordnung 15 gesteckt werden kann, um die Enden der optischen Kabel 2, 3 zu schützen.

Das erfindungsgemässe Steckergehäuse 10 weist erste Befestigungsmittel 16 auf, welche eine Schnappverbindung mit der Steckverbinderkapsel 7 erlauben. In einer bevorzugten Ausführungsform sind diese ersten Befestigungsmittel 16 als Teil eines Dreh-Rast-Verschlusses ausgebildet. Ein derartiger Dreh-Rast-Verschluss verhindert, dass beim Ausziehen der Steckeranordnung 15 aus der Buchsenanordnung 30 sich das Steckergehäuse 10 aus der Steckverbinderkapsel 7 löst und damit Zugkräfte auf die optischen Kabel 2, 3 ausgeübt werden. Bei der gezeigten Anordnung liegt das Steckergehäuse 10 mit seiner Rückseite am Öffnungsrand 17 der Steckverbinderkapsel 7 an. Dies führt dazu, dass im gesteckten Zustand das Steckergehäuse 10 vollständig in den Anbaurahmen 14 hineinragt und die Steckverbinderkapsel 7 dichtend am Anbaurahmen 14 anliegt. Die Steckverbinderkapsel 7 ist dazu mit einem O-Ring 21 versehen. Die erfindungsgemässe Steckverbinderkapsel 7 weist ein seitlich angeordnetes Klinkenpaar 22, 22' auf, um die Steckverbinderkapsel 7 am Anbaurahmen 14 zu sichern.

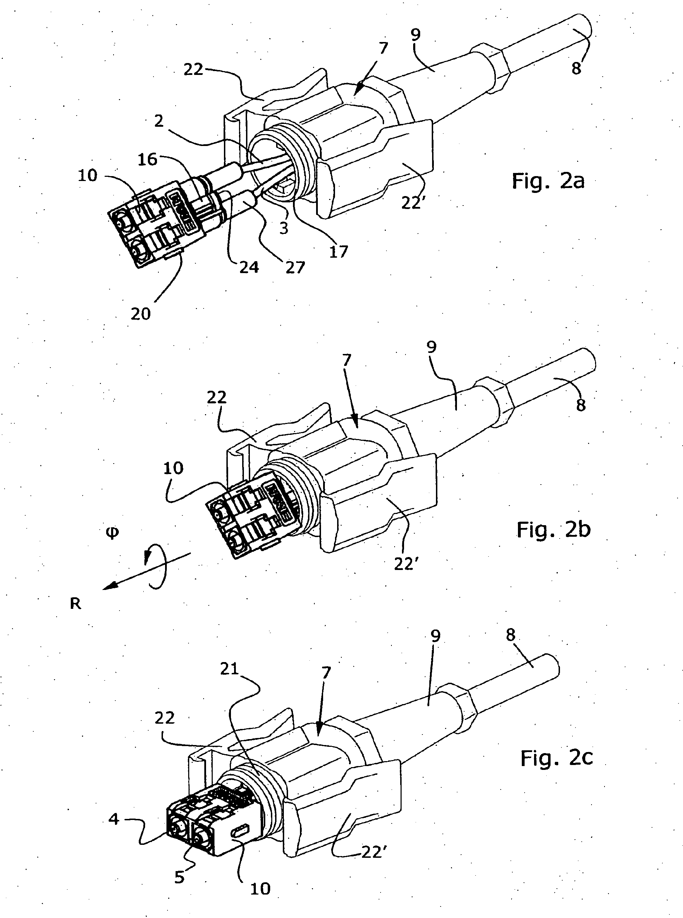

Die Figuren 2a bis 2c zeigen einige Montageschritte für das Zusammenbauen einer erfindungsgemässen Steckeranordnung 15. Vorerst wird ein Dichtungselement, vorzugsweise ein Kabelmantel 8 und ein Knickschutz 9 über die Kabel 2, 3 geschoben. In diesem Zustand werden die Kabel 2, 3 in bekannter Weise ca. 7 cm abisoliert und die einzelnen Fasern konfektioniert, d.h. insbesondere mit einer Ferrule 4, 5 versehen und eventuell geklebt und geschliffen. Nach dem Konfektionieren der Kabel 2, 3 wird eine Steckverbinderkapsel 7 über die derart vorbereiteten Kabel 2, 3 geschoben. Jede der Ferrulen 4, 5 wird vorgängig in einem der Ferrulengehäuse 6a, 6b befestigt. Diese Ferrulengehäuse 6a, 6b werden anschliessend in das erfindungsgemässe Steckergehäuse 10 eingesetzt. In einem nächsten Schritt wird dieses Steckergehäuse 10 in die Steckverbinderkapsel 7 eingeführt, wie aus den Figuren 2a bis 2c ersichtlich, und wird der Knickschutz 9 an der Steckverbinderkapsel 7 und dem Kabelmantel 8 dichtend angebracht. Der Vorgang, mit welchem das Steckergehäuse 10 an der Steckverbinderkapsel 7 befestigt wird, wird in den Figuren 2a bis 2c deutlich gemacht. Vorerst werden die ersten Befestigungsmittel 16 des Steckergehäuses 10 in einer um die Steckrichtung R verdrehten Lage in die Steckverbinderkapsel 7 eingeführt. Figur 2b zeigt das bis zum Anschlag in die Steckverbinderkapsel 7 eingeführte Steckergehäuse 10. Die Rückwand dieses Steckergehäuses 10 liegt in dieser Position am Öffnungsrand 17 der Steckverbinderkapsel 7 an. Ein Teil der ersten Befestigungsmittel 16, insbesondere ein Rastelement 24 liegt nun in einem zweiten Befestigungsmittel, insbesondere in einer inneren Rastnut (nicht dargestellt) der Steckverbinderkapsel 7. Um das Steckergehäuse 10 daran zu hindern, dass dieses beim Ausziehen der Steckverbindung aus der Steckverbinderkapsel 7 herausrutscht, wird das Steckergehäuse 10 mit einer Drehung ϕ um die Steckrichtung R und mit Hilfe von zweiten Befestigungsmitteln in eine lösbare Dreh-Schnappverbindung mit der Steckverbinderkapsel 7 gebracht. Diese zweiten Befestigungsmittel umfassen bei dieser Ausführungsform zusätzlich eine auf der Rastnut angebrachte Rastkerbe, in welche eine Rastrippe 29 des Rastelementes 24 einrastet. Die Anordnung gemäss Figur 2c kann nun als erfindungsgemäss montierte Steckeranordnung 15 verwendet werden.

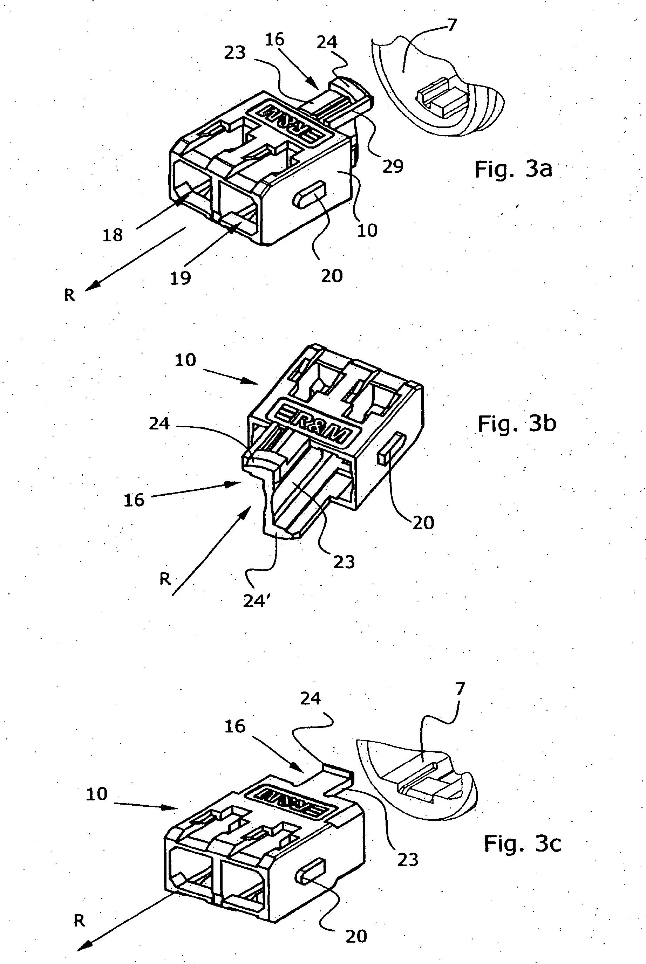

Figuren 3a bis 3c zeigen das erfindungsgemässe Steckergehäuse 10 und die erfindungsgemässen ersten Befestigungsmittel 16 im Detail. Dieses Steckergehäuse 10 weist zwei Steckplätze 18, 19 auf, in welche die Ferrulengehäuse 6a, 6b eingesetzt werden können. Seitliche Nocken 20, sowie ein Codiernocken (nicht ersichtlich) an der Unterseite des Steckergehäuses 10, gewährleisten das korrekte Einführen des Steckergehäuses 10 in eine Buchsenanordnung 30. Die in Fig. 3b im Detail gezeigten ersten Befestigungsmittel 16 umfassen einen Steg 23, welcher vom rückseitigen Ende des Steckergehäuses 10 in Steckgegenrichtung, d.h. in Richtung der Steckverbinderkapsel 7 zeigt. Dieser Steg 23 ist derart dimensioniert, dass die Ferrulengehäuse 6a, 6b in die Steckplätze 18, 19 des Steckergehäuse 10, auch Schlittengehäuse genannt, geführt werden können. Nach dem Einsetzen des Steckergehäuses 10 in die Steckverbinderkapsel 7, können die ersten Befestigungsmittel 16 in wirkungskomplementäre zweite Befestigungsmittel (nicht dargestellt) innerhalb der Steckverbinderkapsel 7 eingreifen.

Figuren 3a bis 3c machen die Geometrie bevorzugter erfindungsgemässer erster Befestigungsmittel 16 deutlich. Der Steg 23 umfasst bei dieser Ausführungsform mindestens ein Kopfteil 24 oder 24', welches quer zur Steckrichtung R kreissegmentförmig geformt ist. In den Figuren 3a bis 3b weisen die ersten Befestigungsmittel 16 einen Steg 23 mit zwei derartigen Kopfteilen 24, 24' auf. Im montierten Zustand liegt mindestens ein Kopfteil 24 in einer im Innern der Steckverbinerkapsel 7 vorgesehenen umlaufenden Nut (nicht dargestellt). Diese Nut weist an geeigneter Stelle eine Schwelle auf, in welche das Kopfteil 24 lösbar einrasten kann. Derart ist gewährleistet, dass das Steckergehäuse 10 nicht mehr in Steckgegenrichtung aus der Steckverbinderkapsel 7 ausziehbar ist, sondern nur über eine Drehbewegung -ϕ aus seiner Raststellung gelöst werden kann.

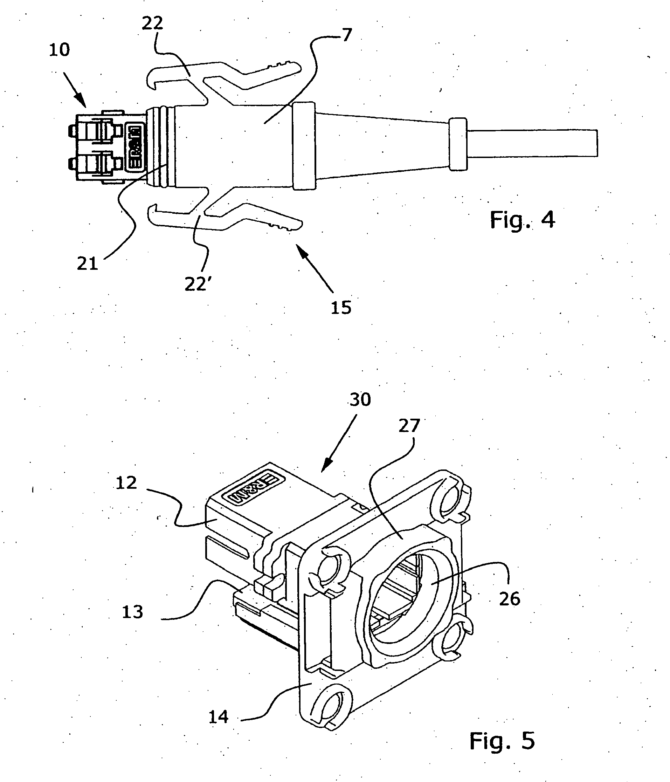

Figur 4 zeigt den montierten Stecker und macht deutlich, dass das erfindungsgemässe Steckergehäuse 10 mit seiner Rückseite am Öffnungsrand der Steckverbinderkapsel 7 anliegt und vollständig in eine Buchsenanordnung 30 gemäss Figur 5 eingeführt werden kann.

Die in den Figuren 4 und 5 dargestellte Steckeranordnung 15 und Buchsenanordnung 30 macht deutlich, dass die Kontaktstelle für die optische Verbindung durch die erfindungsgemässe Steckverbindungsanordnung 1 vollumfänglich geschützt ist, insbesondere also mit Hilfe der einstückigen Steckverbinderkapsel 7 vollständig abkapselbar ist und somit auch bei erschwerten, industriellen Umweltbedingungen langfristig einwandfrei und sicher funktioniert. Im gesteckten Zustand legt sich der O-Ring 21 dichtend an eine Anschlagfläche 26 eines Öffnungskragens 27 des Anbaurahmens 14. Dieser Öffnungskragen 27 ist hinterschnitten, derart, dass dritte Befestigungsmittel, insbesondere mindestens eine der Klinken 22, 22' diesen Öffnungskragen 27 hintergreifen kann und damit die Steckeranordnung 15 sicher an der Buchsenanordnung 30 halten kann.

Es versteht sich, dass die hier dargestellten Ausführungsformen für alle Arten optischer Steckverbinder, insbesondere aber für SC-RJ Steckverbinder, anwendbar ist. Dabei ist es unerheblich, ob damit nur eine oder ob mehrere optische Kabel gleichzeitig verbunden werden sollen. Natürlich können auch andere geometrische Gestaltungen vorgesehen werden, insbesondere kann das erfindungsgemässe Steckergehäuse 10 im montierten Zustand vollständig oder nur teilweise im Innern der Steckverbinderkapsel 7 liegen. Das Steckergehäuse 10 oder die einzelnen Ferrulengehäuse 6a, 6b können mit selbsttätigen Schliessklappen versehen sein, um die optischen Fasern im ungesteckten Zustand vor Verschmutzung zu schützen.

Es versteht sich ebenfalls, dass der Fachmann ohne erfinderisches Dazutun die Steckerkapsel 7 anstelle mit Hilfe von Klinken 22 mit Hilfe einer Überwurfmutter am Anbaurahmen 14 oder an einem Gerätegehäuse befestigen kann. Andere Mittel zur sicheren Befestigung der erfindungsgemässen Steckeranordnung 15 liegen im gewöhnlichen Handeln des Fachmanns. So versteht es sich ebenfalls von selbst, dass die erfindungsgemäss ausgerüstete Steckeranordnung 15 auch selbsttätige Schliessklappen oder eine manuell aufsetzbare Schutzkappe 25 aufweisen kann.

## Patentansprüche

1. Steckergehäuse (10) eines optischen SC-RJ Steckers, für die Aufnahme mindestens eines Ferrulengehäuses (6a, 6b), **dadurch gekennzeichnet, dass** dieses Steckergehäuse (10) erste am rückseitigen Ende des Steckergehäuses (10) angeordnete Befestigungsmittel (16) für eine Befestigung mit einer Steckverbinderkapsel (7) aufweist, wobei die ersten Befestigungsmittel (16) einen Steg (23) umfassen, welcher vom rückseitigen Ende des Steckergehäuses (10) in Steckgegenrichtung zeigt und wobei der Steg (23) mindestens ein Rastelement (24, 24', 24") für die Bildung eines mit der Steckverbinderkapsel (7) wirkungskomplemetär zusammenwirkenden Schnappverschlusses umfasst.

2. Steckergehäuse (10) nach Anspruch 1, **dadurch gekennzeichnet, dass** dieses erste Befestigungsmittel (16) für eine lösbare Befestigung mit der Steckverbinderkapsel (7) vorgesehen ist.

3. Steckergehäuse (10) nach Anspruch 2, **dadurch gekennzeichnet, dass** die ersten Befestigungsmittel (16) mindestens ein Rastelement (24, 24', 24") für die Bildung eines mit der Steckverbinderkapsel (7) wirkungskomplementär zusammenwirkenden Dreh-Schnappverschlusses umfassen.

4. Steckergehäuse (10) nach Anspruch 3, **dadurch gekennzeichnet, dass** das Rastelement (24, 24', 24") eine Rastnut aufweist.

5. Steckergehäuse (10) nach Anspruch 3, **dadurch gekennzeichnet, dass** das Rastelement (24, 24', 24") eine Rastnase aufweist.

6. Steckergehäuse (10) nach Anspruch 5, **dadurch gekennzeichnet, dass** die Rastnase quer zur Steckrichtung (R) kreissegmentförmig geformt ist.

7. Steckergehäuse (10) nach Anspruch 1 mit einer Steckverbinderkapsel (7), wobei diese Steckverbinderkapset (7) zweite Befestigungsmittel für eine Befestigung mit diesen Steckergehäuse (10) aufweist, welche zweite Befestigungsmittel wirkungskomplementär zu den ersten Befestigungsmitteln (24, 24',24") des Steckergehäuses (10) ausgebildet sind.

8. Steckergehäuse (10) nach Anspruch 7, **dadurch gekennzeichnet, dass** die Steckverbinderkapsel (7) dritte Befestigungsmittel in Form einer Klinke (22 oder 22') zur Befestigung an einen Anbaurahmen (14) oder einem Gerätegehäuse, aufweist.

9. Steckergehäuse (10) nach Anspruch 7, **dadurch gekennzeichnet, dass** die Steckverbinderkapsel (7) dritte Befestigungsmittel in Form einer Überwurfmutter aufweist.

## Claims

1. Plug casing (10) of an optical SC-RJ plug, for receiving at least one ferrule casing (6a, 6b), **wherein** said plug casing (10) is provided with first fastening means (16), arranged at the rearward end of the plug casing, for fastening with a plug connector capsule (7), whereby the first fastening means (16) is provided with a bar (23) extending from the rearward end of the plug casing (10) in the opposite direction to plug insertion direction and whereby the bar (23) comprises at least one engagement element (24, 24', 24") for forming a snap-in latch acting mutually and complementarily with the plug connector capsule (7).

2. Plug casing (10) according to claim 1, **wherein** said first fastening means (16) are provided for a detachable fastening to the plug connector capsule (7).

3. Plug casing (10) according to claim 2, **wherein** said first fastening means (16) comprise at least one engagement element (24, 24', 24") for forming a rotatable snap-in latch acting mutually and complementarily with the plug connector capsule (7).

4. Plug casing (10) according to claim 3, **wherein** the engagement element (24, 24', 24") is provided with an engagement notch.

5. Plug casing (10) according to claim 3 **wherein** the engagement element (24, 24', 24") is provided with an engagement catch.

6. Plug casing (10) according to claim 5, **wherein** the engagement catch is formed as a segment of a circle transverse to the direction of insertion (R).

7. Plug casing (10) according to claim 1 having a plug connector capsule (7), whereby said plug connector capsule (7) is provided with second fastening means for fastening with said plug casing (10), said second fastening means being designed so as to act complementarily to the first fastening means (16) of the plug casing (10).

8. Plug casing (10) according to claim 7, **wherein** said plug connector capsule (7) comprises third fastening means in the form of a latching element (22 or 22') for fastening to an assembly frame (14) or a housing.

9. Plug casing (10) according to claim 7, **wherein** said plug connector capsule (7) comprises third fastening means in the form of a union-nut.

## Revendications

1. Boîtier de connexion (10) d'un connecteur SC-RJ optique pour le logement d'au moins un boîtier en ferrite (6a, 6b), **caractérisé en ce que** ce boîtier de connexion (10) présente des premiers moyens de fixation (16) disposés sur l'extrémité arrière du boîtier de connexion (10) pour une fixation avec une capsule de connecteur enfichable (7), dans lequel les premiers moyens de fixation (16) comprennent une branche (23) qui est dirigée à partir de l'extrémité arrière du boîtier de connexion (10) dans le sens contraire d'enfichage et dans lequel la branche (23) comporte au moins un élément d'encliquetage (24, 24', 24") pour la formation d'une fermeture à enclenchement coopérant de manière complémentaire et fonctionnelle avec la capsule de connecteur enfichable (7).

2. Boîtier de connexion (10) selon la revendication 1, **caractérisé en ce que** ce premier moyen de fixation (16) est prévu pour une fixation détachable avec la capsule de connecteur enfichable (7).

3. Boîtier de connexion (10) selon la revendication 2, **caractérisé en ce que** les premiers moyens de fixation (16) comportent au moins un élément d'encliquetage (24, 24', 24") pour la formation d'une fermeture à enclenchement rotative coopérant de manière complémentaire et fonctionnelle avec la capsule de connecteur enfichable (7).

4. Boîtier de connexion (10) selon la revendication 3, **caractérisé en ce que** l'élément d'encliquetage (24, 24', 24") présente une rainure d'encliquetage.

5. Boîtier de connexion (10) selon la revendication 3, **caractérisé en ce que** l'élément d'encliquetage (24, 24', 24") présente un bec d'encliquetage.

6. Boîtier de connexion (10) selon la revendication 5, **caractérisé en ce que** le bec d'encliquetage est formé transversalement au sens d'enfichage (R) comme un segment de cercle.

7. Boîtier de connexion (10) selon la revendication 1 avec une capsule de connecteur enfichable (7), dans lequel cette capsule de connecteur enfichable (7) présente des deuxièmes moyens de fixation pour une fixation avec ce boîtier de connexion (10), lesquels deuxièmes moyens de fixation sont réalisés de manière complémentaire et fonctionnelle par rapport aux premiers moyens de fixation (24, 24', 24") du boîtier de connexion (10).

8. Boîtier de connexion (10) selon la revendication 7, **caractérisé en ce que** la capsule de connecteur enfichable (7) présente des troisièmes moyens de fixation sous la forme d'un cliquet (22 ou 22') pour la fixation sur un cadre rapporté (14) ou un boîtier d'appareil.

9. Boîtier de connexion (10) selon la revendication 7, **caractérisé en ce que** la capsule de connecteur enfichable (7) présente des troisièmes moyens de fixation sous la forme d'un écrou-raccord.
